# EUROPEAN PATENT SPECIFICATION

(11) **EP 3 985 265 B1**
(45) Date of publication and mention of the grant of the patent: **29.11.2023**
(21) Application number: 21167691.1
(22) Date of filing: 09.04.2021
(51) Int. Cl.: F16B 5/06, F16B 9/00, F16B 45/00, F16B 2/18, F16B 1/00

(54) **A SUSPENSION SYSTEM WITH A LOCKING-RELEASE SYSTEM**
AUFHÄNGUNGSSYSTEM MIT EINEM VERRIEGELUNGSFREIGABESYSTEM
SYSTÈME DE SUSPENSION AVEC UN SYSTÈME DE DÉVERROUILLAGE

(30) Priority: 13.10.2020 IT 202000024031
(43) Date of publication of application: 20.04.2022
(73) Proprietor: Hi-Tech Revenge S.r.l., 65121 Pescara (IT)
(72) Inventor: GUAZZIERI, Luciano, I-65121 PESCARA (IT)
(74) Representative: Long, Giorgio

(56) References cited:
- WO-A1-2019/200633
- US-B2- 7 131 616

## Description

### Field of the invention

The present invention relates to a suspension system, in particular a magnetic hook, for loads, such as cables, pipes or other equipment provided with a locking-release system, facilitating the temporary use thereof on ferromagnetic surfaces, in particular for shipbuilding.

### Background art

In the shipbuilding industry, one problem, which normally has to be dealt with is that of temporarily suspending an object, equipment, pipes or cables needed in the construction step (electrical cables, fume extraction and delivery pipes, pipes for oxyacetylene welding machines, compressed air and water pipes, etc.). This need is particularly felt in the case of installations on smooth vertical walls, such as, for example, in a corridor on a ship or on an outer wall thereof, therefore, it is essential, mainly for safety reasons, to bring the pipes, cables or any other equipment to a level so as not to obstruct the free passage of the operators and various equipment needed for the workings.

The loads to be supported are usually in the order of a few dozen kilos and it is known that the attractive force of the magnets develops perpendicularly to the surface; due to the scarce coefficient of friction between the magnet and the metal surface, the capacity to support loads applied parallel to the surface is therefore limited.

Usually, the ratio between the magnetic attraction force and the force needed to cause the magnet to translate parallel to the attracted surface is one to eight; this ratio rises considerably (one to four) if a thin layer of material is interposed with a high coefficient of friction (rubber or other), which, while causing the attractive power of the magnet to decline slightly, manages to create a good coefficient of friction between the magnet itself and the ferrous surface.

As a result, on average, in this second case, in order to obtain an admissible perpendicular load of 1 an attractive force of 4 is needed.

Therefore, in order to support a load of 50 Kg perpendicular to the metal surface (gross of an adequate factor of safety) 400 kg of attractive force are needed in the absence of interposing material with a high coefficient of friction and 200 Kg if material is interposed with a high coefficient of friction.

In both cases, the high attractive force to be used would not allow easy installation, let alone the simple removal of the magnet and the hooking system associated therewith.

Considering that on a ship, in particular, on a cruise ship, the number of such installations is very elevated, it is easy to see how the time factor strongly influences the economics of production and therefore, how the aforesaid need is particularly felt.

Therefore, it is a particularly felt problem to avail of a suspension system for cables, pipes or other loads, to facilitate operations, which is cheap and light, which can be used almost universally and which allows a temporary installation and successive quick and easy removal of the suspension system. A suspension system of the prior art is shown in US 7131616 B2.

### Summary of the invention

The present invention provides a temporary load suspension system as defined in claim 1.

The suspension system of the invention can be used for the temporary installation on a wall made of a metal material, which is sensitive to magnetic attraction, in particular a ferromagnetic material, even if it is coated by a thin film or by a layer of non-attractive material (for example, paint).

### Brief description of the drawings

Further features and advantages of the present invention will be apparent from the following detailed description with reference to the following figures:
Figure 1 is a plan view of the coupling face of a suspension system according to the invention, in the release state;
Figure 2 is a plan view of the opposite face of the suspension system in figure 1, in the release state;
Figure 3 is a plan view of the coupling face of the suspension system in figure 1, in the locking state;
Figure 4 is a plan view of the opposite face of the suspension system in figure 1, in the locking state;
Figure 5A is a sectional view from above of the suspension system of the invention in the locking position;
Figure 5B is a sectional view from above of the suspension system of the invention in the release position;
Figure 6 is a flat sectional view of a detail of the suspension system of the invention;
Figure 7 is a plan view of a different detail of the suspension system of the invention;
Figure 8 is a side sectional view of the detail in Figure 7;
Figure 9 is a plan view of a different detail of the suspension system of the invention;
Figure 10 is a view according to direction A of the detail in figure 9.

### Detailed description of the invention

With reference to the figures, the suspension system according to the invention, globally denoted with reference numeral 1, comprises a fixed body 2 having a flat main face 2a, a magnetic support 3 associated with said fixed body 2 and a hook 4, in which the magnetic support 3 is movable along a direction perpendicular to the flat main face 2a of the fixed body 2 between a retracted release position and an extended locking position, and in which the hook 4 is movable between a release position, in which the hook 4 is parallel to the main face 2a of the fixed body 2, and a locking position, in which the hook 4 is perpendicular to the main face 2a of the fixed body 2.

The fixed body 2 is hollow and comprises, on the face opposite to the main face 2a, an open cavity 5, the shape of which corresponds, in negative, to the shape of the magnetic support 3 and has contour sides 9.

In the example shown in the figures, the fixed body 2 has a substantially rectangular shape with rounded edges, two long sides 2b and two short sides 2c. However, in other variants, nothing prevents it from having a different shape, for example, a square, polygonal, round or oval shape. In general, the fixed body 2 comprises an outer side perimeter 6 running along all sides.

Along the outer side perimeter 6 of the fixed body 2 - in particular, of the example shown, along a short side 2c - a recess 7 is formed between two sides 8a, 8b, which protrude from the outer side perimeter 6 and preferably, in which one side 8b protrudes more than the other side 8a.

At the recess 7, i.e. between the sides 8a, 8b, the contour side 9 comprises a first through hole 10a, parallel to the main face 2a of the fixed body 2 aligned with a second through hole 10b placed in the opposite position in the contour side 9.

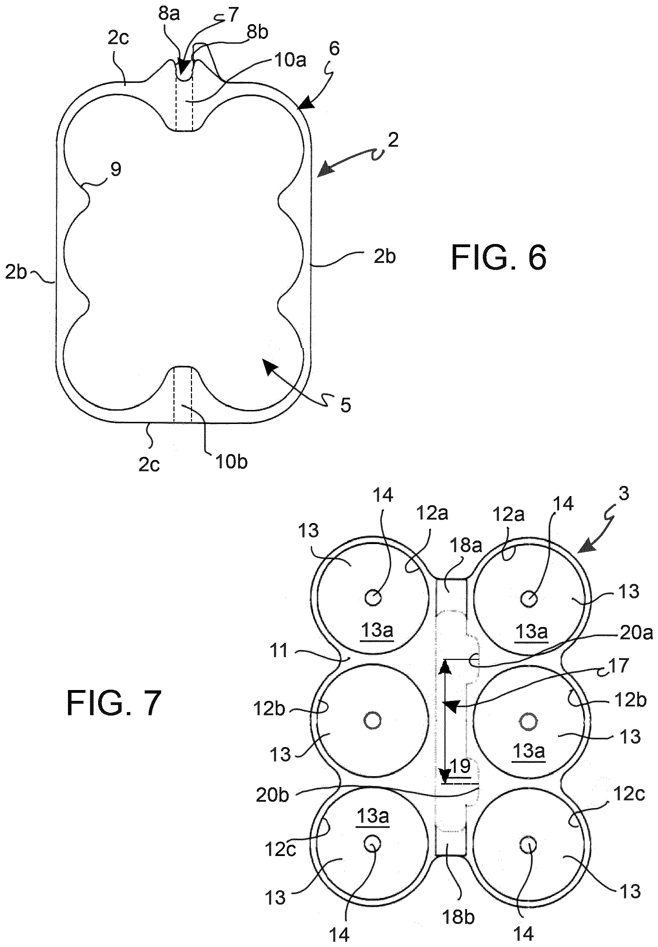

The magnetic support 3 (figures 7-8) comprises a body 11, with a complementary shape to that of the open cavity 5 of the fixed body 2, wherein said body 11 has one or more cavities 12a, 12b, 12c in which just as many permanent magnets 13 are placed. In the example shown in the figures, six cylindrical magnets are present, but, in other variants, nothing stops the number of magnets from being increased or decreased or even only one single magnet from being used, depending on the needs of weight and size and the required attractive force. It is also possible to use magnets with a different shape and size from the cylindrical one shown in the figures. In general, the suspension system 1 of the invention must carry a maximum load from 25 to 50 kg, therefore the number, size and magnetization of the permanent magnets 13 must be determined for such purpose.

Preferably, the permanent magnets 13 are neodymium magnets.

Instead, the fixed body 2 and the body 11 of the magnetic support 3 are made of a material, which is not attracted by a magnet, typically a polymeric material, such as polyethylene, polypropylene or similar.

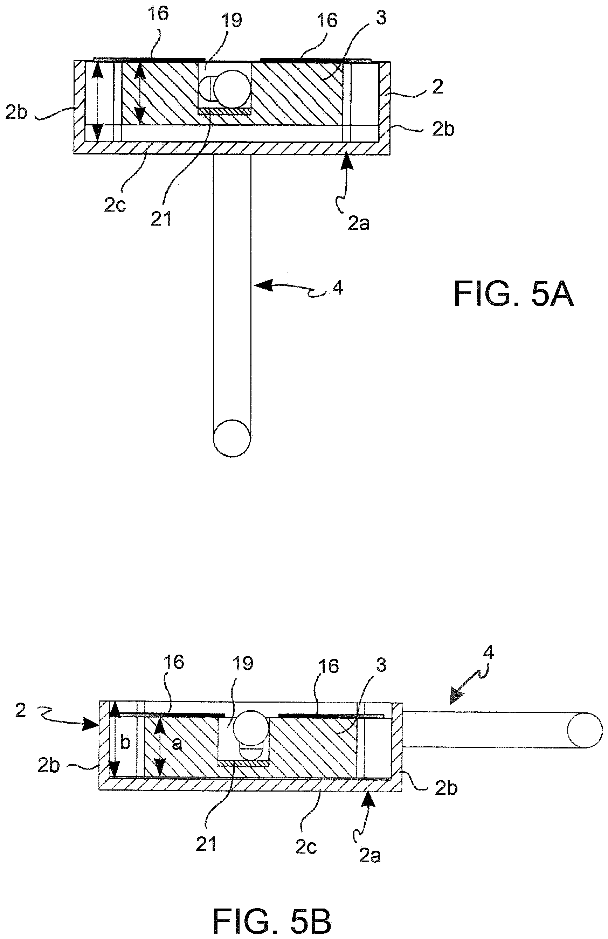

The thickness a of the magnetic support 3 is smaller than the depth b of the open cavity 5 of the fixed body 2 (see figures 5A-5B), so that, when the magnetic support 3 is in the retracted position (figure 5B), it is completely inside said open cavity 5; while when the magnetic support 3 is in the extended position (figure 5A), it is level with or protrudes slightly (typically, less than 1 mm) from the open cavity 5.

The magnets 13 comprise a central hole 14 for a fixing screw 15 for fixing to the body 11.

In preferred embodiments, the magnets 13 comprise, on the outer face 13a, i.e. the face designed to adhere to a ferromagnetic metal surface, a protective disk 16, typically made of a rubber or elastomeric material.

The body 11 of the magnetic support 3 further comprises a central groove 17, which, when the magnetic support 3 is inserted into the open cavity 5 of the fixed body 2, is aligned with the first and the second through hole 10a, 10b of the fixed body 2.

The central groove 17 has end portions 18a, 18b with a semi-cylindrical surface placed level with the through holes 10a, 10b and a deeper intermediate portion 19.

Preferably, the bottom of the intermediate portion 19 of the central groove 17 is coated by a metal foil 21, typically stainless steel.

The intermediate portion 19 of the central groove 17 further comprises two side recesses 20a, 20b with an elongated shape, spaced apart, from center to center, by a length c (figure 7).

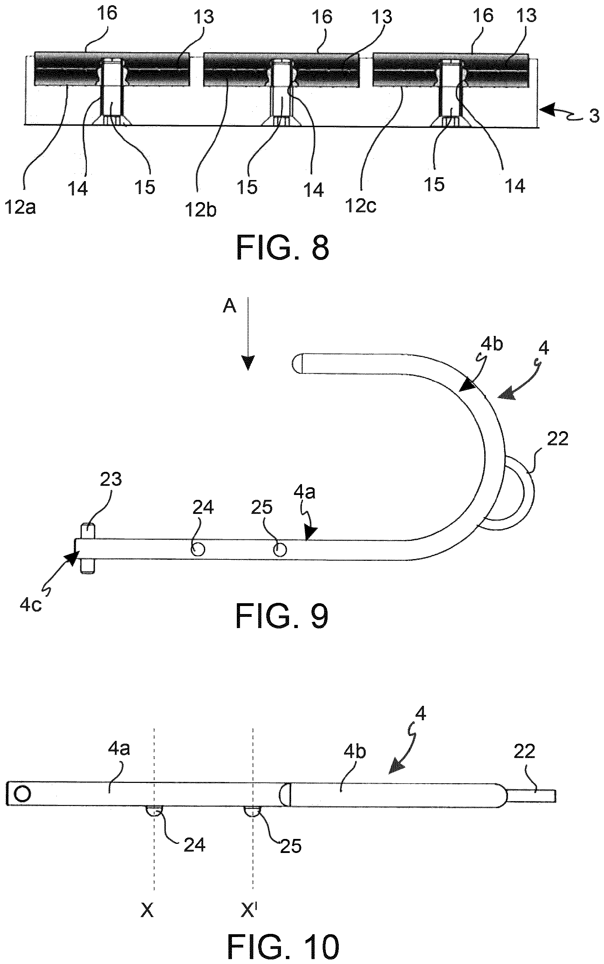

The hook 4 (figures 9-10) lies on a plane and comprises a rectilinear portion 4a and a curved portion 4b. Typically, the hook 4 is made of a resistant metal material, in particular stainless steel.

The curved portion 4b comprises an eyelet 22 placed on the convex side, the function of which is to allow the suspension of further objects and/or pipes, which might not be suitable for being inserted into the primary hook 4.

The rectilinear portion 4a comprises a distal end 4c onto which a first pin 23, parallel to the plane of the hook 4, is fixed, for example, by interlocking, in a special hole.

The rectilinear portion 4a further comprises, in the intermediate position, a second and a third pin 24, 25, which are also fixed, by interlocking, in special holes, by means of welding or any other manner.

The second and the third pin 24, 25 are arranged along axes x, x' perpendicular to the plane of the hook 4, at a distance c from center to center, therefore, in positions, which are such as to be housed in the side recesses 20a, 20b of the central groove 17 of the body 11 of the magnetic support 3 when the suspension system 1 is assembled (see further on).

Preferably, the second and the third pin 24, 25 have a rounded or hemispherical shape.

The suspension system 1 is assembled in the following manner.

The magnetic support 3 is housed in the open cavity 5 of the fixed body 2, with the permanent magnets 13 facing outwards. The hook 4, still devoid of the pins 23, 24, 25, is then inserted, by means of the distal end 4c thereof, into the second through hole 10b and then into the first through hole 10a, so as to exit outwards. At this point, the second and the third pin 24, 25 are fixed to the rectilinear portion 4a of the hook 4, when the latter lies on a plane parallel to the main face 2a of the fixed body 2. The hook is then rotated into a position perpendicular to the main face 2a of the fixed body 2 and then the first pin 23 is fixed, as described above.

The first pin 23 prevents the hook 4 from exiting the housing thereof in the through holes 10a, 10b. When present, the more protruding side 8b allows the hook 4 to rotate between the position parallel to the perpendicular position only in one direction.

The installation of the suspension system 1 of the invention on a ferrous/ferromagnetic surface, such as that of a ship interior, is carried out in the following manner.

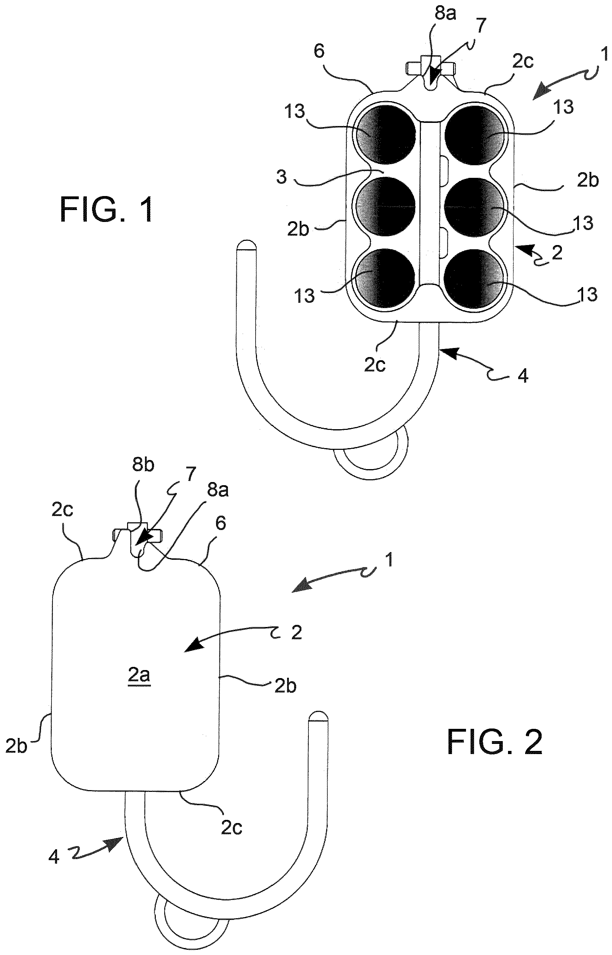

When the hook 4 is in the release position, i.e. it is arranged parallel to the main face 2a of the fixed body 2, the second and the third pin 24, 25 are facing towards the bottom of the central groove 17 and insist thereupon or, when present, on the metal plate 21 (figures 1 and 5B). Thereby, the magnetic support 3 is kept in the retracted position and the permanent magnets 13 are placed beneath (for example, by about 2 mm) the edge of the open cavity 5 of the fixed body 2. If the suspension system 1 is brought close to a ferromagnetic surface, keeping the main face 2a on the outside, the attractive force of the permanent magnets 13 is sufficient to keep the suspension system on the surface, but it is not sufficient to support loads.

In this position, the first pin 23 is placed parallel to the plane of the main face 2a of the fixed body 2, above the sides 8a, 8b of the recess 7 (see figures 1 and 2). Instead, when the hook 4 is rotated by 90° into the locking position, i.e. perpendicular to the plane of the main face 2a (figure 5A), the second and the third pin 24, 25 take a side position (axes x, x' parallel to the plane of the main face 2a of the fixed body 2) and are inserted at the upper end of the side recesses 20a, 20b of the body 11 of the magnetic support 3, freeing the magnetic support 3, which, by virtue of the attraction of the magnets, moves into the extended position. In this position, the permanent magnets 13 make contact (potentially by means of the relative protective disks 16) with the surface on which the suspension system 1 must be temporarily installed and exert the maximum calculated attractive force, which, as said, is sufficient to support loads of 25 to 50 kg, depending on the dimensioning of the suspension system 1.

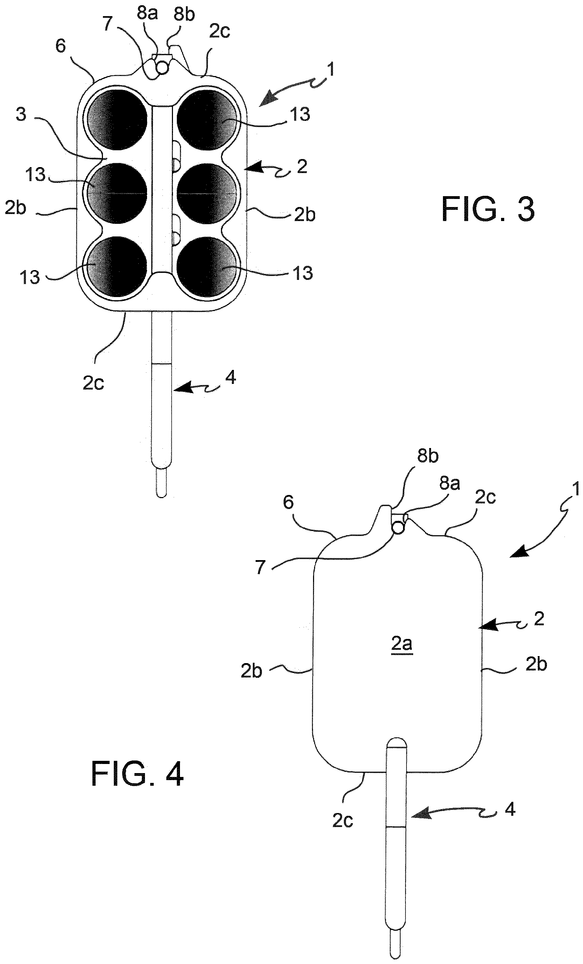

In such locking position, instead, the first pin 23 is aligned with the recess 7, thus, by bringing the hook 4 downwards, the first pin 23 is inserted into said recess 7 between the respective sides 8a, 8b, as shown in figures 3 and 4, and, at the same time, the second and the third pin 24, 25 slide inside the side grooves 20a, 20b until the lower end thereof. Thus, the hook 4 remains in the locking position, corresponding to the position of use, in which the hook 4 protrudes from the temporary installation surface, preventing it from accidentally returning, for example, due to an undesired knock, to the release position and therefore detaching the suspension system 1 from the surface on which it is installed.

After use, the hook 4 will be brought back first into the raised position thereof, so as to free the first pin 23 from the recess 7, then rotated by 90° so as to detach the permanent magnets 13 from the installation surface and cause the magnetic support 3 to return to the retracted position thereof (figures 1 and 2).

It should be noted that the manual detachment of the suspension system 1 from the installation surface would be impossible when the magnets 13 exert the maximum attractive force thereof, i.e. in the locking position. Vice versa, the rotation of the hook 4, by virtue of the second and third pin 24, 25, acts like a lever, making the manual detachment possible.

The releasing is made even easier when the shape of the second and third pin 24, 25 is rounded and even more so when it is hemispherical.

In the embodiment shown in the figures, two pins 24, 25 have been comprised, but it will also be possible to use only one pin or even more than two pins.

The advantages of the invention can easily be deduced from the above.

In fact, the suspension system 1 can easily be installed, also by virtue of the fact that even in the release position the magnetic attraction is sufficient to support the entire device, even if it is without a load.

Removal is equally simple and does not require the aid of an external force greater than that, which can be exerted by an operator's hand to remove the magnets, due to the lever effect obtained with the mechanism of the invention.

The suspension system 1 is cheap and easy to make, and allows sufficiently elevated loads to be supported, as is required in the manufacturing of electrical systems or systems of another kind on ships or in other environments with ferrous surfaces.

Therefore, it is possible to proceed quickly with such installation activities, due to the speed of temporarily installing and moving the suspension system 1 of the invention from one place to another.

It is apparent that only some particular embodiments of the present invention have been described, to which a person skilled in the art will be able to make all the necessary changes for the adaption thereof to particular applications, without thereby departing from the protective scope of the present invention, as defined by the appended claims.

## Claims

1. A temporary load suspension system (1) comprising a fixed body (2) having a coupling surface and a flat main face (2a) opposite to the coupling surface of the suspension system (1), a magnetic support (3) associated with said fixed body (2) and a hook (4), in which the magnetic support (3) is movable along a direction perpendicular to the flat main face (2a) of the fixed body (2) between a retracted release position and an extended locking position, and in which the hook (4) is movable between a release position, in which the hook (4) is parallel to the main face (2a) of the fixed body (2), and a locking position, in which the hook (4) is perpendicular to the main face (2a) of the fixed body (2), and in which, in the release position, the hook (4) keeps the magnetic support (3) in the retracted position.

2. The suspension system (1) according to claim 1, wherein the fixed body (2) is hollow and comprises, on the face opposite to the main face (2a), an open cavity (5), whose shape corresponds, in negative, to the shape of the magnetic support (3), the open cavity (5) comprising contour sides (9), and wherein the fixed body (2) comprises an outer side perimeter (6).

3. The suspension system (1) according to claim 2, wherein, along the outer side perimeter (6) of the fixed body (2), a recess (7) is formed, comprised between two sides (8a, 8b), which protrude from the outer side perimeter (6) and wherein preferably, one side (8b) protrudes more than the other side (8a), and wherein, at the recess (7) between the sides (8a, 8b), the contour side (9) comprises a first through hole (10a), parallel to the main face (2a) of the fixed body (2) and which is aligned with a second through hole (10b) placed in the opposite position in the contour side (9).

4. The suspension system (1) according to any one of claims 2 to 3, wherein the magnetic support (3) comprises a body (11), with a complementary shape to that of the open cavity (5) of the fixed body (2), wherein said body (11) has one or more cavities (12a, 12b, 12c) in which just as many permanent magnets (13) are placed; and in which the thickness (a) of the magnetic support (3) is smaller than the depth (b) of the open cavity (5), so that when the magnetic support (3) is in the retracted position, it is completely inside said open cavity (5), while when the magnetic support (3) is in the extended position, it is level with, or protrudes slightly, for example, less than 1 mm, from the open cavity (5).

5. The suspension system (1) according to claim 4, wherein the body (11) of the magnetic support (3) comprises a central groove (17), which, when the magnetic support (3) is inserted in the open cavity (5) of the fixed body (2), is aligned with the first and the second through hole (10a, 10b) of the fixed body (2); and wherein the central groove (17) comprises an intermediate portion (19), whose bottom is preferably coated by a metal foil (21), and which comprises two side recesses (20a, 20b) with an elongated shape, which are spaced apart, from center to center, by a length (*c*).

6. The suspension system (1) according to claim 5, wherein the hook (4) comprises a rectilinear portion (4a) and a curved portion (4b) and lies on a plane, and wherein the rectilinear portion (4a) comprises a distal end (4c) onto which a first pin (23) is fixed, parallel to the plane of the hook (4), the rectilinear portion (4a) further comprising, in the intermediate position, a second and a third pin (24, 25) arranged along axes (x, x') perpendicular to the plane of the hook (4), in such positions as to be housed in the side recesses (20a, 20b) of the central groove (17) of the body (11) of the magnetic support (3) when the suspension system (1) is assembled.

7. The suspension system (1) according to claim 6, wherein the second and the third pin (24, 25) have a rounded or hemispherical shape.

8. The suspension system (1) according to any one of claims 1 to 7, wherein:
- the fixed body (2) and the body (11) of the magnetic support (3) are made of a material, which is not attracted by a magnet, typically a polymeric material;
- the permanent magnets (13) are preferably neodymium magnets;
- the hook (4) is made of stainless steel.

9. The suspension system (1) according to any one of claims 4 to 8, wherein the magnets (13) comprise, on an outer face (13a), i.e. the face designed to adhere to a ferromagnetic metal surface, a protective disk (16), typically made of a rubber or elastomeric material.

10. The suspension system (1) according to any one of claims 5 to 9, wherein the central groove (17) has end portions (18a, 18b) with a semi-cylindrical surface placed level with the through holes (10a, 10b).

11. The suspension system (1) according to any one of claims 5 to 10, wherein the permanent magnets (13) comprise a central hole (14) for a fixing screw (15) for fixing to the body (11) of the magnetic support (3).

## Patentansprüche

1. Temporäres Last-Aufhängungssystem (1), umfassend einen festen Körper (2) mit einer Kopplungsfläche und einer ebenen Hauptfläche (2a) gegenüber der Kopplungsfläche des Aufhängungssystems (1), eine magnetische Halterung (3), welche dem festen Körper (2) zugeordnet ist, und einen Haken (4), in welchem die magnetische Halterung (3) entlang einer Richtung senkrecht zu der ebenen Hauptfläche (2a) des festen Körpers (2) zwischen einer zurückgezogenen Freigabeposition und einer ausgedehnten Verriegelungsposition bewegbar ist, und wobei der Haken (4) zwischen einer Freigabeposition, in welcher der Haken (4) parallel zu der Hauptfläche (2a) des festen Körpers (2) ist, und einer Verriegelungsposition bewegbar ist, in welcher der Haken (4) senkrecht zu der Hauptfläche (2a) des festen Körpers (2) ist, und wobei in der Freigabeposition der Haken (4) die magnetische Halterung (3) in der zurückgezogenen Position hält.

2. Aufhängungssystem (1) nach Anspruch 1, wobei der feste Körper (2) hohl ist und an der Fläche gegenüber der Hauptfläche (2a) einen offenen Hohlraum (5) umfasst, dessen Form negativ der Form der magnetischen Halterung (3) entspricht, der offene Hohlraum (5) Konturseiten (9) umfasst, und wobei der feste Körper (2) einen Außenseiten-Umfang (6) umfasst.

3. Aufhängungssystem (1) nach Anspruch 2, wobei entlang des Außenseiten-Umfangs (6) des festen Körpers (2) eine Ausnehmung (7) gebildet ist, welche zwischen zwei Seiten (8a, 8b) umfasst ist, welche von dem Außenseiten-Umfang (6) vorstehen, und wobei vorzugsweise eine Seite (8b) weiter als die andere Seite (8a) vorsteht, und wobei an der Ausnehmung (7) zwischen den Seiten (8a, 8b) die Konturseite (9) ein erstes Durchgangsloch (10a) parallel zu der Hauptfläche (2a) des festen Körpers (2) umfasst, und welche mit einem zweiten Durchgangsloch (10b) ausgerichtet ist, welches in der entgegengesetzten Position in der Konturseite (9) platziert ist.

4. Aufhängungssystem (1) nach einem der Ansprüche 2 bis 3, wobei die magnetische Halterung (3) einen Körper (11) mit einer komplementären Form zu derjenigen des offenen Hohlraums (5) des festen Körpers (2) umfasst, wobei der Körper (11) einen oder mehrere Hohlräume (12a, 12b, 12c) aufweist, in welchen genauso viele Permanentmagnete (13) platziert sind; und wobei die Dicke (a) der magnetischen Halterung (3) kleiner als die Tiefe (b) des offenen Hohlraums (5) ist, so dass, wenn die magnetische Halterung (3) in der zurückgezogenen Position ist, sie sich vollständig innerhalb des offenen Hohlraums (5) befindet, während, wenn die magnetische Halterung (3) in der ausgedehnten Position ist, sie mit dem offenen Hohlraum (5) fluchtet oder leicht davon vorsteht, beispielsweise weniger als 1 mm.

5. Aufhängungssystem (1) nach Anspruch 4, wobei der Körper (11) der magnetischen Halterung (3) eine zentrale Nut (17) umfasst, welche, wenn die magnetische Halterung (3) in dem offenen Hohlraum (5) des festen Körpers (2) eingesetzt ist, mit dem ersten und dem zweiten Durchgangsloch (10a, 10b) des festen Körpers (2) ausgerichtet ist; und wobei die zentrale Nut (17) einen Zwischenabschnitt (19) umfasst, dessen Boden vorzugsweise durch eine Metallfolie (21) beschichtet ist, und welche zwei Seitenausnehmungen (20a, 20b) mit einer länglichen Form umfasst, welche von Mitte zu Mitte um eine Länge (c) beabstandet sind.

6. Aufhängungssystem (1) nach Anspruch 5, wobei der Haken (4) einen geradlinigen Abschnitt (4a) und einen gebogenen Abschnitt (4b) umfasst und an einer Ebene liegt, und wobei der geradlinige Abschnitt (4a) ein distales Ende (4c) umfasst, auf welchem ein erster Stift (23) parallel zu der Ebene des Hakens (4) befestigt ist, wobei der geradlinige Abschnitt (4a) ferner in der Zwischenposition einen zweiten und einen dritten Stift (24, 25) umfasst, welche entlang Achsen (x, x') senkrecht zu der Ebene des Hakens (4) in derartigen Positionen angeordnet sind, dass sie in den Seitenausnehmungen (20a, 20b) der zentralen Nut (17) des Körpers (11) der magnetischen Halterung (3) aufgenommen sind, wenn das Aufhängungssystem (1) montiert ist.

7. Aufhängungssystem (1) nach Anspruch 6, wobei der zweite und der dritte Stift (24, 25) eine abgerundete oder halbkugelige Form aufweisen.

8. Aufhängungssystem (1) nach einem der Ansprüche 1 bis 7, wobei:
- der feste Körper (2) und der Körper (11) der magnetischen Halterung (3) aus einem Material gefertigt sind, welches nicht von einem Magneten angezogen wird, typischerweise einem Polymermaterial;
- die Permanentmagnete (13) vorzugweise Neodym-Magnete sind;
- der Haken (4) aus rostfreiem Stahl gefertigt ist.

9. Aufhängungssystem (1) nach einem der Ansprüche 4 bis 8, wobei die Magnete (13) an einer Außenfläche (13a), d.h. der Fläche, welche dazu ausgelegt ist, an einer ferromagnetischen Metallfläche anzuhaften, eine Schutzscheibe (16) umfassen, welche typischerweise aus einem Gummi- oder Elastomermaterial gefertigt ist.

10. Aufhängungssystem (1) nach einem der Ansprüche 5 bis 9, wobei die zentrale Nut (17) Endabschnitte (18a, 18b) mit einer halbzylindrischen Fläche aufweist, welche fluchtend mit den Durchgangslöchern (10a, 10b) platziert ist.

11. Aufhängungssystem (1) nach einem der Ansprüche 5 bis 10, wobei die Permanentmagnete (13) ein zentrales Loch (14) für eine Befestigungsschraube (15) zum Befestigen des Körpers (11) der magnetischen Halterung (3) umfassen.

## Revendications

1. Système de suspension de charge temporaire (1) comprenant un corps fixe (2) présentant une surface d'accouplement et une face principale plane (2a) opposée à la surface d'accouplement du système de suspension (1), un support magnétique (3) associé audit corps fixe (2), et un crochet (4), dans lequel le support magnétique (3) est mobile le long d'une direction perpendiculaire à la face principale plane (2a) du corps fixe (2) entre une position rétractée de libération et une position déployée de verrouillage, et dans lequel le crochet (4) est mobile entre une position de libération, dans laquelle le crochet (4) est parallèle à la face principale (2a) du corps fixe (2), et une position de verrouillage, dans laquelle le crochet (4) est perpendiculaire à la face principale (2a) du corps fixe (2), et dans lequel, dans la position de libération, le crochet (4) maintient le support magnétique (3) dans la position rétractée.

2. Système de suspension (1) selon la revendication 1, dans lequel le corps fixe (2) est creux et comprend, sur la face opposée à la face principale (2a), une cavité ouverte (5) dont la forme correspond, en négatif, à la forme du support magnétique (3), la cavité ouverte (5) comprenant des côtés de contour (9), et dans lequel le corps fixe (2) comprend un périmètre latéral externe (6).

3. Système de suspension (1) selon la revendication 2, dans lequel, le long du périmètre latéral externe (6) du corps fixe (2), est formé un évidement (7) compris entre deux côtés (8a, 8b) qui font saillie du périmètre latéral externe (6), et dans lequel, de préférence, un côté (8b) fait saillie davantage que l'autre côté (8a), et dans lequel, au niveau de l'évidement (7) entre les côtés (8a, 8b), le côté de contour (9) comprend un premier trou traversant (10a), parallèle à la face principale (2a) du corps fixe (2) et qui est aligné avec un deuxième trou traversant (10b) placé dans le côté contour (9), mais dans la position opposée.

4. Système de suspension (1) selon l'une quelconque des revendications 2 à 3, dans lequel le support magnétique (3) comprend un corps (11) de forme complémentaire à celle de la cavité ouverte (5) du corps fixe (2), dans lequel ledit corps (11) présente une ou plusieurs cavités (12a, 12b, 12c) dans lesquelles sont placés autant d'aimants permanents (13) ; et dans lequel l'épaisseur (a) du support magnétique (3) est inférieure à la profondeur (b) de la cavité ouverte (5), de sorte que lorsque le support magnétique (3) se trouve dans la position rétractée, il est complètement à l'intérieur de ladite cavité ouverte (5), tandis que lorsque le support magnétique (3) se trouve dans la position déployée, il est de niveau avec la cavité ouverte ou légèrement en saillie, par exemple de moins de 1 mm, de la cavité ouverte (5).

5. Système de suspension (1) selon la revendication 4, dans lequel le corps (11) du support magnétique (3) comprend une rainure centrale (17) qui, lorsque le support magnétique (3) est inséré dans la cavité ouverte (5) du corps fixe (2), est aligné avec le premier et le deuxième trou traversant (10a, 10b) du corps fixe (2) ; et dans lequel la rainure centrale (17) comprend une partie intermédiaire (19), dont le fond est de préférence revêtu d'une feuille métallique (21), et qui comprend deux évidements latéraux (20a, 20b) de forme allongée qui sont espacés, de centre à centre, d'une longueur (c).

6. Système de suspension (1) selon la revendication 5, dans lequel le crochet (4) comprend une partie rectiligne (4a) et une partie incurvée (4b) et repose sur un plan, et dans lequel la partie rectiligne (4a) comprend une extrémité distale (4c) sur laquelle est fixée une première goupille (23), parallèlement au plan du crochet (4), la partie rectiligne (4a) comprenant en outre, dans la position intermédiaire, une deuxième et une troisième goupille (24, 25) disposées le long d'axes (x, x') perpendiculaires au plan du crochet (4), dans des positions telles qu'elles se logent dans les évidements latéraux (20a, 20b) de la rainure centrale (17) du corps (11) du support magnétique (3) lorsque le système de suspension (1) est assemblé.

7. Système de suspension (1) selon la revendication 6, dans lequel la deuxième et la troisième goupille (24, 25) ont une forme arrondie ou hémisphérique.

8. Système de suspension (1) selon l'une quelconque des revendications 1 à 7, dans lequel :
- le corps fixe (2) et le corps (11) du support magnétique (3) sont réalisés dans un matériau qui n'est pas attiré par un aimant, de façon type un matériau polymère ;
- les aimants permanents (13) sont de préférence des aimants au néodyme ;
- le crochet (4) est réalisé en acier inoxydable.

9. Système de suspension (1) selon l'une quelconque des revendications 4 à 8, dans lequel les aimants (13) comprennent, sur une face externe (13a), c'est-à-dire la face conçue pour adhérer à une surface métallique ferromagnétique, un disque de protection (16), de façon type réalisé en caoutchouc ou dans un matériau élastomère.

10. Système de suspension (1) selon l'une quelconque des revendications 5 à 9, dans lequel la rainure centrale (17) présente des parties d'extrémité (18a, 18b) ayant une surface semi-cylindrique placée au niveau des trous traversants (10a, 10b).

11. Système de suspension (1) selon l'une quelconque des revendications 5 à 10, dans lequel les aimants permanents (13) comprennent un trou central (14) destiné à recevoir une vis de fixation (15), à fixer au corps (11) du support magnétique (3).
